Europäisches Patentamt

European Patent Office

Office européen des brevets

(19)

(11) Veröffentlichungsnummer: **0 243 527 B1**

## (12) EUROPÄISCHE PATENTSCHRIFT

(45) Veröffentlichungstag der Patentschrift: **14.08.91**

(51) Int. Cl.⁵: **G05D 16/20**

(21) Anmeldenummer: **86106040.8**

(22) Anmeldetag: **02.05.86**

(54) **Verfahren zur Regelung und/oder Steuerung des Druckes in einem Rezipienten.**

(43) Veröffentlichungstag der Anmeldung:
**04.11.87 Patentblatt 87/45**

(45) Bekanntmachung des Hinweises auf die
Patenterteilung:
**14.08.91 Patentblatt 91/33**

(84) Benannte Vertragsstaaten:
**AT CH DE FR GB IT LI NL**

(56) Entgegenhaltungen:
**EP-A- 0 057 581**
**EP-A- 0 093 191**
**EP-A- 0 149 010**
**DE-B- 1 211 450**
**US-A- 3 455 323**

(73) Patentinhaber: **LEYBOLD AKTIENGESELL-
SCHAFT**
**Bonner Strasse 498**
**W-5000 Köln 51(DE)**

(72) Erfinder: **Schmidt, Lothar, Dr.**
**Käthe-Kollwitz-Strasse 16**
**W-5014 Kerpen-Sindorf(DE)**
Erfinder: **Schubert, Hans-Joachim**
**Schützenweg 69**
**W-5047 Wesseling(DE)**

(74) Vertreter: **Leineweber, Jürgen, Dipl.-Phys.**
**Nagelschmiedshütte 8**
**W-5000 Köln 40(DE)**

## Beschreibung

Die Erfindung bezieht sich auf ein Verfahren zur Regelung und/ oder Steuerung des Druckes in einem Rezipienten mit Hilfe einer Vakuumpumpe, die über einen Membrandruckregler mit Referenzdruckkammer an den Rezipienten angeschlossen ist.

Es ist häufig erforderlich, den Druck in einem Rezipienten (Vakuumkammer, Prozeßkammer), in welchem z.B. ein Bedampfungs-, Ätz-, Trocknungsprozeß oder dergleichen abläuft, konstant zu halten oder in einer bestimmten Weise dem im Rezipienten ablaufenden Prozeß anzupassen.

Aus der DD-PS 81 252 ist es bekannt, den Druck in einer Vakuumanlage dadurch konstant zu halten, indem servogesteuerte Nadelventile intermittierend geöffnet werden. Weiterhin ist offenbart, zusätzliche Vakuumpumpen zu- oder wegzuschalten oder in der Saugleitung eine den Saugquerschnitt vergrößernde oder verkleinernde Drosselklappe vorzusehen. Schließlich ist beschrieben, die Pumpendrehzahl einer rotierenden Pumpe zu steuern. Verfahren und Einrichtungen dieser Art sind schwierig zu dimensionieren und insbesondere häufig problematisch in ihren dynamischen Eigenschaften.

Zum Stand der Technik gehört weiterhin ein Membrandruckregler gemäß EP-A-0 093 191 (DE-OS-32 15 972), der zwischen dem Rezipienten und der Vakuumpumpe angeordnet wird und die Aufgabe hat, den Druck innerhalb des Rezipienten konstant zu halten. Dazu ist im Druckreglergehäuse eine Referenzdruckkammer untergebracht, deren eine Seite von einer Membran gebildet wird. Die Membran dient als Stellglied für die Verbindung zwischen Rezipienten und Vakuumpumpe. Entspricht der Druck in der Referenzdruckkammer dem Druck des Rezipienten, dann ist die Verbindung zwischen Rezipienten und Vakuumkammer geschlossen. Nimmt der Druck im Rezipienten zu, stellt die Membran die Verbindung zwischen Rezipienten und Vakuumpumpe her. Membrandruckregler dieser Art sind im Druckbereich von 10 bis 1000 mbar einsetzbar und aufgrund ihres sehr unproblematischen dynamischen Verhaltens (im gesamten Druckbereich keine Schwingungsneigung) zur Konstanthaltung des Druckes im Rezipienten besonders geeignet. Durch Veränderung des Referenzdruckes kann mit Reglern dieser Art im Prinzip auch eine Drucksteuerung im Rezipienten vorgenommen werden.

Zum Stand der Technik gehört auch noch der Inhalt der EP-A-57 581. Diese offenbart eine Einrichtung zur Regelung eines druckempfindlichen Ventils, welche zwei gesonderte Einstellventile zur Erhöhung bzw. zur Erniedrigung eines Referenzdruckes umfaßt. Der Betätigung der Ventile dienten ein Regler, der offensichtlich eine Sollwertvorgabe enthält, und ein Meßglied. Das Meßglied liefert an den Regler Signale, die dem Druck im auslaßseitigen Anschlußrohr entsprechen. Dieser Auslaßdruck ist mit Hilfe des Reglers durch gezieltes Öffnen und Schließen der Einstellventile und damit des Hauptventiles regelbar.

Der vorliegenden Erfindung liegt die Aufgabe zugrunde, den mechanisch arbeitenden Membrandruckregler derart in einem Steuerungssystem einzusetzen, daß eine automatische Prozeßdruckregelung mit hoher Genauigkeit möglich wird.

Erfindungsgemäß wird diese Aufgabe durch die Maßnahmen nach dem Patentanspruch 1 gelöst. Diese Maßnahmen ermöglichen - wie weiter unten erläutert - eine automatische Prozeßdruckregelung mit erhöhter Genauigkeit durch die Nachführung des Referenzdruckes entsprechend der Abweichung zwischen vorgegebenem und gemessenem Prozeßdruck. Die vom Gasdurchsatz abhängige Genauigkeit des Membrandruckreglers läßt sich mit einer Einrichtung dieser Art von 4 % auf besser als 1 % steigern. Weiterhin wird ein fernsteuerbarer und/oder rechnergestützter Betrieb des Membranreglers möglich.

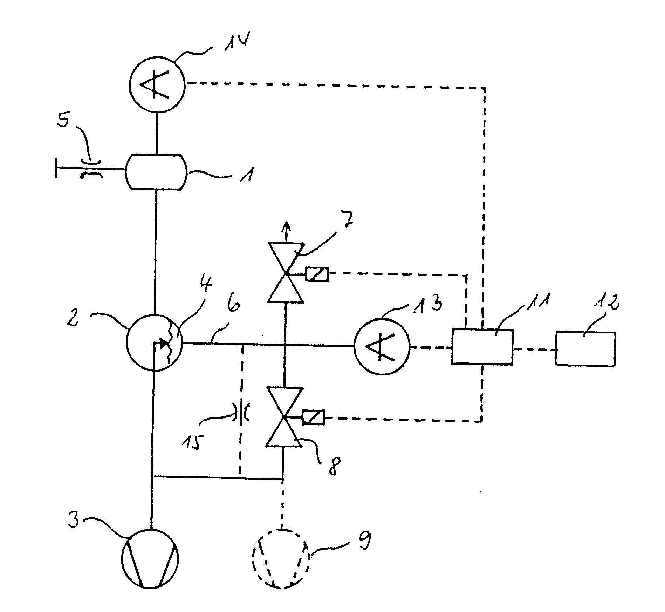

Weitere Vorteile und Einzelheiten der Erfindung sollen anhand eines in der Figur schematisch dargestellten Ausführungsbeispieles erläutert werden.

Die Figur zeigt den Rezipienten 1, an den über den Membrandruckregler 2 die Vakuumpumpe 3 (Prozeßvakuumpumpe) angeschlossen ist. Ein Membrandruckregler 2 der verwendeten Art ist aus der DE-OS-32 15 972 bekannt. Seine Referenzdruckkammer ist mit 4 bezeichnet. Der Rezipient 1 ist mit einer Gaseinlaßdüse 5 ausgerüstet, um die für den Betrieb des Membrandruckreglers 2 erforderliche Mindestgaszufuhr (z. B. 0,1 mbl/sec) sicherzustellen.

Um den Referenzdruck in der Referenzdruckkammer 4 automatisierbar und fernsteuerbar einstellen und/oder ändern zu können, sind zwei über die Leitung 6 an die Referenzdruckkammer 4 angeschlossene Ventile 7 und 8 vorgesehen. Das Ventil 7 hat die Funktion eines Gaseinlaßventils und stellt im geöffneten Zustand eine Verbindung der Referenzdruckkammer 4 mit der Atmosphäre oder einem Gasvorrat her. Das Ventil 8 hat die Funktion eines Gasaustrittsventiles. Es stellt im geöffneten Zustand die Verbindung zwischen der Referenzdruckkammer 4 und dem Einlaß der Prozeßvakuumpumpe 3 her. Als Alternative ist eine separate Vakuumpumpe 9 gestrichelt dargestellt, deren Einlaß mit dem Ventil 8 zu verbinden ist, wenn aus besonderen Gründen die Prozeßvakuumpumpe 3 nicht verwendet werden kann.

Die Steuerung der Ventile 7 und 8 erfolgt mit Hilfe des Reglers 11. Als Eingangsgröße erhält der Regler 11 eine Sollwertvorgabe, die z. B. vom schematisch als Block dargestellten Sollwertgeber 12 geliefert wird. Auch interne manuelle Vorgaben oder andere externe Steuersignale sind denkbar. Weiterhin erhält der Regler 11 Eingangsgrößen, die dem Referenzdruck in der Referenzdruckkammer 4 und dem Prozeßdruck im Rezipienten 1 entsprechen. Zur Messung und Erzeugung dieser Eingangsgrößen sind die Meßglieder 13 und 14 vorgesehen. Vakuummeßgeräte, die ihren Meßwert in Form elektrischer Signale liefern, sind dafür geeignet.

Soll der Druck im Rezipienten 1 (Prozeßdruck) konstant gehalten werden, dann wird dem Regler 11 der gewünschte Prozeßdruck als Sollwert manuell oder extern vorgegeben. Danach betätigt der Regler 11 die Auf-Zu-Ventile 7 und/oder 8 so lange, bis der gewünschte Prozeßdruck erreicht ist. Zur Konstanthaltung des Druckes genügt eines der beiden Meßglieder 13 oder 14. Die von dem jeweiligen Meßglied gelieferten Signale werden im Regler 11 jeweils mit dem Sollwert verglichen. Ist der Istwert zu hoch, wird das Ventil 8 für kurze Zeit geöffnet, so daß sich der Referenzdruck in der Referenzdruckkammer 4 erniedrigt. Das Saugvermögen der Vakuumpumpe 3 wird dadurch erhöht. Ist der gemessene Istwert zu niedrig, wird das Ventil 7 für kurze Zeit geöffnet, so daß sich der Druck in der Referenzdruckkammer 4 erhöht. Dieser Schritt hat eine Reduzierung des Saugvermögens der Vakuumpumpe 3 zur Folge.

Besteht aufgrund des im Rezipienten 1 ablaufenden Prozesses die Gefahr hoher Druckschwankungen mit der Folge unerwünschter Schwingungserscheinungen, dann ist es zweckmäßig, als Istwert den Druck in der Referenzdruckkammer 4 zu verwenden. Druckschwankungen der im Rezipienten 1 zu erwartenden Höhe treten in der Referenzdruckkammer nicht mehr auf, so daß die Gefahr des Auftretens von Schwingungserscheinungen wesentlich reduziert ist.

Die beiden Meßglieder 13 und 14 lassen sich auch kombiniert in zwei nacheinander ablaufenden Regelschritten verwenden. Zunächst wird wieder der gewünschte Prozeßdruck dem Regler 11 als Sollwert vorgegeben. Im ersten Regelschritt stellt der Regler 11 den Referenzdruck gleich oder nahezu gleich dem gewünschten Prozeßdruck ein. Das geschieht - wie oben beschrieben - durch Betätigung der Ventile 7 und 8 so lange, bis das Meßglied 13 den Soll-Referenzdruck anzeigt. Sobald der mit dem Meßglied 14 bestimmte Prozeßdruck ausreichend konstant ist, wird im zweiten Regelschritt aus der Abweichung zwischen vorgegebenem Prozeßdruck (Sollwert) und gemessenem Prozeßdruck ein neuer, gegebenenfalls geänderter Soll-Referenzdruck bestimmt. Anschließend wird der Referenzdruck durch den Regler auf den neuen Soll-Referenzdruck eingestellt. Diese Neueinstellung des Membrandruckreglers bewirkt eine Neueinstellung des Prozeßdruckes, wodurch eine präzisere Annäherung des Prozeßdruckes an den als Sollwert vorgegebenen Soll-Prozeßdruck erreicht wird. Der zweite Regelschritt wird dann in geeigneten Zeitabständen wiederholt. Dadurch reagiert die vorbeschriebene Einrichtung automatisch auf sich zeitlich ändernde Prozeßbedingungen. Wird die Sollwertvorgabe geändert, dann ist wieder mit dem ersten Regelschritt zu beginnen. Gleichzeitig kann mit einem Druckregelverfahren dieser Art die vom Gasdurchsatz abhängige Genauigkeit des Membrandruckreglers eliminiert werden, so daß sich eine Regelgenauigkeit von unter 1 % ergibt.

Das in der Figur dargestellte Ausführungsbeispiel zeigt noch gestrichelt eine weitere Variante. Das Gasaustrittsventil 8 kann durch die gestrichelt dargestellte Düse 15 ersetzt werden. Voraussetzung dafür ist, daß das Gaseinlaßventil 7 ein dynamisch regelbares Ventil ist, dessen Öffnungsquerschnitt vom Regler 11 gesteuert wird.

## Patentansprüche

1. Verfahren zur Regelung und/oder Steuerung des Prozeßdruckes in einem Rezipienten (1) mit Hilfe einer Vakuumpumpe (3), die über einen Membrandruckregler (2) mit Referenzdruckkammer (4) an den Rezipienten (1) angeschlossen ist, wobei an die Referenzdruckkammer (4) ein Gaseinlaßventil (7) zur Erhöhung und ein Gasaustrittsventil (8) zur Erniedrigung des Referenzdruckes angeschlossen sind und wobei zur Betätigung der Ventile (7, 8) ein Regler (11) vorgesehen ist, dem eine Sollwertvorgabe (12) für einen gewünschten Prozeßdruck sowie sowohl ein an den Rezipienten (1) angeschlossenes erstes Meßglied (14) als auch ein an die Referenzdruckkammer (4) des Membrandruckreglers (3) angeschlossenes zweites Meßglied (13) zugeordnet sind; bei diesem Regelungs- und/ oder Steuerungsverfahren wird in einem ersten Regelschritt mit Hilfe des Reglers (11) und des zweiten Meßgliedes (13) der Referenzdruck auf den gewünschten Prozeßdruck eingestellt, indem die Ventile (7, 8) so lange betätigt werden, bis das zweite Meßglied (13) den gewünschten Prozessdruck als Soll-Referenzdruck anzeigt; danach wird in einem zweiten Regelschritt aus der Abweichung zwischen dem nach der Sollwertvorgabe gewünschten Prozeßdruck und mit dem ersten Meßglied (14) gemessenem Prozeßdruck ein neuer, gegebenenfalls geänderter Soll-Referenzdruck bestimmt; schließlich wird dann der Referenzdruck in der Referenzdruckkammer (4) mit Hilfe des Reglers (11) auf den neuen Soll-Referenzdruck eingestellt.

## Claims

1. Method of regulating and/or controlling the process pressure in a recipient (1) by means of a vacuum pump (3) which is connected by a diaphragm pressure regulator (2) having a reference pressure chamber (4) to the recipient (1), with a gas inlet valve (7) for raising the reference pressure and a gas outlet valve (8) for lowering the reference pressure being connected to the reference pressure chamber (4) and with there being provided for actuating the valves (7, 8) a regulator (11), with which a set-point input (12) for a desired process pressure and both a measuring element (14) connected to the recipient (1) and a second measuring element (13) connected to the reference pressure chamber (4) of the diaphragm pressure regulator (3) are associated; in said regulating and/or control method, in a first regulating step, the reference pressure is set by means of the regulator (11) and the second measuring element (13) to the desired process pressure by actuating the valves (7, 8) until the second measuring element (13) indicates the desired process pressure as the set-point reference pressure; then, in a second regulating step, a new, possibly different, set-point reference pressure is determined from the variation between the desired process pressure according to the set-point input and the process pressure measured by the first measuring element (14); finally, the reference pressure in the reference pressure chamber (4) is then set by means of the regulator (11) to the new set-point reference pressure.

## Revendications

1. Procédé de régulation et/ou commande d'une pression de processus dans un récipient (1) à l'aide d'une pompe à vide (3) qui, par l'intermédiaire d'un régulateur de pression à membrane (2) avec chambre de pression de référence (4), est raccordée au récipient (1), une vanne d'admission de gaz (7) et une vanne de sortie de gaz (8), respectivement pour accroître et pour diminuer la pression de référence, étant raccordées à la chambre de pression de référence (4), et un régulateur (11) étant prévu pour l'actionnement des vannes (7, 8), régulateur auquel sont affectés une allocation de valeur de consigne (12) pour une pression de processus désirée tout aussi bien qu'un premier organe de mesure (14) raccordé au récipient (1) et qu'un deuxième organe de mesure (13) raccordé à la chambre de pression de référence (4) du régulateur de pression à membrane (3), ledit procédé de régulation et/ou commande étant tel que dans une première étape de régulation à l'aide du régulateur (11) et du deuxième organe de mesure (13) la pression de référence soit réglée à la pression de processus désirée, cela par le fait que les vannes (7,8) sont actionnées jusqu'à ce que le deuxième organe de mesure (13) indique la pression de processus désirée en tant que pression de référence-consigne; après quoi, dans une deuxième étape de régulation, à partir de l'écart entre la pression de processus désirée selon l'allocation de valeur de consigne et la pression de processus mesurée avec le premier organe de mesure (14), on détermine une nouvelle pression de référence-consigne, éventuellement modifiée; la pression de référence dans la chambre de pression de référence (4) étant alors réglée, à l'aide du régulateur (11), à la nouvelle pression de référence-consigne.